# EUROPÄISCHE PATENTSCHRIFT

(11) **EP 2 746 198 B1**
(45) Veröffentlichungstag und Bekanntmachung des Hinweises auf die Patenterteilung: **29.03.2017**
(21) Anmeldenummer: 13006032.0
(22) Anmeldetag: 20.12.2013
(51) Int. Cl.: B65G 21/20

(54) **Verwendung einer Fördereinrichtung**
Use of a conveyor
Utilisation d'un dispositif de transport

(30) Priorität: 24.12.2012 DE 102012025390
(43) Veröffentlichungstag der Anmeldung: 25.06.2014
(73) Patentinhaber: Grumbach und Petermann GmbH, 33428 Harsewinkel (DE)
(72) Erfinder: Grumbach, Udo, 33428 Harsewinkel (DE)
(74) Vertreter: Schober, Mirko

(56) Entgegenhaltungen:
- WO-A1-2010/059205
- DE-A1-102010 050 035
- JP-A- H11 139 545
- NL-C1- 1 014 204

## Beschreibung

Die Erfindung betrifft eine Verwendung einer Fördereinrichtung zur Förderung von Fördergut mit flächigen Fördergutbestandteilen nach dem Oberbegriff des Anspruchs 1.

Fördereinrichtungen der in Rede stehenden Art weisen ein umlaufendes Förderband auf, auf dem das Fördergut transportiert wird.

Das Förderband stellt dabei zum Transport eine nutzbare Wandfläche mit einer bestimmten Breite zur Verfügung, auf der das Fördergut transportiert werden kann. Dabei besteht regelmäßig das Problem, dass Bestandteile des Förderguts seitlich von dem Förderband herabfallen können und so Betriebsstörungen verursachen oder jedenfalls eine unerwünschte Verschmutzung der Umgebung der Fördereinrichtung darstellen können. Dies geschieht vor allem, wenn Flachgut - also Förderbestandteile, deren Höhe sehr klein gegenüber ihrer Fläche ist und die daher in erster Linie flach liegend transportiert werden, wie z. B. Papier oder Pappe - seitlich aus einer Fördereinrichtung austritt, weil sich Flachgut unter den seitlichen Abstreifen hin durchschieben kann.

Um dies zu verhindern, lehrt die DE 299 10 397 U1 die Verwendung einer Abstreiflippe als seitliches Begrenzungselement für die nutzbare Oberfläche des Förderbandes in Kombination mit einer Verdickung an den Seitenrändern des Förderbandes. Die seitlichen Begrenzungselemente grenzen an das Förderband in dessen nutzbaren Bereich an und dichten dabei nach Art einer schleifenden oder einer Spaltdichtung an der nutzbaren Fläche des Förderbandes, welche sich relativ zu den Begrenzungselementen bewegt, ab, wodurch sich die Verdickung im nunmehr für das Fördergut erst nach dem Passieren des Spaltes zwischen Begrenzungselement und Förderband erreichbaren Bereich befindet und dort eine zusätzliche Barriere für all diejenigen Bestandteile des Fördergutes, welche das Begrenzungselement passieren, darstellt. "Angrenzen" versteht sich daher im Folgenden so, dass sowohl ein vollständiger Kontakt zwischen den angrenzenden Bauteilen als auch eine Ausbildung eines Zwischenraumes, insbesondere Spaltes darunter zu verstehen ist.

Eine derartige Einrichtung mag wirkungsvoll beim Transport von Schüttgütern sein, Schwierigkeiten ergeben sich jedoch insbesondere dann, wenn das Fördergut Flachgut ist und flächige Elemente, wie beispielsweise Papier- oder Pappfetzen, aufweist. Derartige flächige Fördergutbestandteile neigen besonders dazu, zwischen Begrenzungselement und Förderband zu gelangen, was im Fall flächiger Elemente die Folge hat, dass diese aufgrund der Relativbewegung zwischen Förderband und Begrenzungselement in eine rotierende Bewegung versetzt werden, mit der Folge, dass sich diese Fördergutbestandteile unter das Begrenzungselement schieben können. Für derartige flächige Fördergutbestandteile stellt auch ein Wulst am Rand des Förderbandes keine wirksame Barriere mehr dar. Die Bestandteile können über diesen hinweg geschoben werden und so von der Fördereinrichtung fallen oder sich in dieser ansammeln und zu Störungen führen.

Aus JP 09040156 A ist eine Fördereinrichtung für Verpackungen bekannt, deren Begrenzungselemente korrugierte Flächen sind, welche dafür sorgen sollen, dass flache Gegenstände an den gewölbten zum Förderbereich hin vorstehenden Abschnitten an deren nach innen zur Mitte des Förderbandes hin orientierten Flanken in Richtung Förderbandmitte geleitet werden. Nachteilig ist an dieser Vorrichtung jedoch, dass die Vorsprünge aufgrund der gewellten Struktur der Begrenzungselemente auch in Förderrichtung rückwärtige Flanken aufweisen, welche von der Mitte des Förderbandes weg orientiert sind. Insbesondere sehr flache Gegenstände können sich unter den gewölbten Vorsprüngen hindurch schieben und dann an den rückwärtigen Flanken nach außen abgedrängt werden.

Die WO 2010/59205 A1 offenbart eine Verwendung einer Fördereinrichtung zur Förderung von Fördergut mit flächigen Fördergutbestandteilen nach dem Oberbegriff des Anspruchs 1.

Der Erfindung liegt daher die Aufgabe zugrunde, eine Fördereinrichtung, insbesondere Flachgutfördereinrichtung, anzugeben, bei welcher das beschriebene Unterlaufen des Begrenzungselements durch flächige Fördergutbestandteile verhindert oder zumindest erschwert wird und ein seitliches Austreten von flächigen Teilen nicht mehr möglich ist.

Die Aufgabe wird gelöst durch eine Verwendung einer Fördereinrichtung zur Förderung von Fördergut mit flächigen Fördergutbestandteilen nach Anspruch 1.

Die Födereinrichtung weist Leitelemente auf, die derart ausgebildet sind, dass zwischen Förderband und Leitelement geratene Fördergutbestandteile durch die Relativbewegung des Förderbandes und der Leitelemente in eine Bewegung versetzt werden, die eine in Breitenrichtung zur Mitte des Förderbandes hin gerichtete translatorische Komponente aufweist. Dabei sind hinter den Leitelementen in Förderrichtung des Förderbandes Freiräume vorgesehen.

Die Bewegung wird dadurch bewirkt, dass bei flächigen Fördergutbestandteilen diese zwischen dem Förderband und dem Leitelement derart verklemmt werden, dass an der Unterseite der flächigen Fördergutbestandteile das Förderband und an der Oberseite ein Leitelement angreifen, wobei durch die entstehenden Reibkräfte zwischen einerseits dem Förderband und dem Fördergutbestandteil, welche naturgemäß in Förderrichtung gerichtet sind, und andererseits zwischen dem Leitelement und dem Fördergutbestandteil dem Fördergutbestandteil eine Bewegungskomponente translatorischer Art verleihen, die eine zur Mitte des Förderbandes hin gerichtete Komponente in der Breitenrichtung des Förderbandes aufweist. Das Leitelement ist derart gestaltet, dass die zwischen dem Fördergutbestandteil und dem Leitelement wirkenden Treibkräfte dem Fördergutbestandteil eine translatorische Bewegungskomponente zur Mitte des Förderbandes hin verleihen. Sollte ein Teil des Fördergutes durch eines der Leitelemente hindurch tauchen, gelangt es in einen dahinter angeordneten Freiraum und wird durch das Förderband in Förderrichtung weiter transportiert und trifft auf das in Förderrichtung nächte Leitelement, welches das Fördergutteil nach innen ablenkt. In jedem Fall wird durch die Freiräume hinter den Leitelementen verhindert, dass Fördergutteile seitlich nach außen abgedrängt werden und das Förderband verlassen. Vorteilhafterweise ist hinter den jeweiligen Leitelementen, die auch als Abkantung aus einem Begrenzungselement gebildet sein können, eine Hinterschneidung vorgesehen. Durch diese wird erreicht, dass Fördergutbestandteile, die unter den Leitelementen hindurch tauchen können, weil sie sehr flach sind, nach Passieren der Leitelemente sofort wieder freigegeben werden und so in Förderrichtung weiter transportiert werden können.

Die Leitelemente sind dabei derart ausgebildet, dass die Fördergutbestandteile zusätzlich in eine rotierende Bewegung um eine zumindest im Wesentlichen senkrecht zur nutzbaren Fläche des Förderbandes orientierte Achse versetzt werden. Dabei würde bei in ihrer Dicke gleichmäßigen flächigen Fördergutbestandteilen eine Rotation um eine zur Ebene des Förderbandes senkrechte Achse entstehen, bei Fördergutbestandteilen mit unregelmäßiger Dicke ist es jedoch auch möglich, dass es zu einer Bewegung um eine Achse, welche nur annähernd senkrecht zur Ebene des Förderbandes ist, oder eine Art Rezessionsbewegung ausführt, kommt. Derartige Rotationsbewegungen können sich mit der gewünschten translatorischen Bewegung überlagern oder diese sogar unterstützen, in dem Sinne, dass sich durch die Drehbewegung und die Reibkräfte zwischen Leitelement, Förderband und Fördergutbestandteil der Fördergutbestandteil in Richtung der Förderbandmitte verschiebt.

Konstruktiv kann das Leitelement beispielsweise so ausgeführt sein, dass es eine Haupterstreckungsrichtung aufweist, welche sowohl eine Richtungskomponente in Förderrichtung als auch eine Richtungskomponente in Breitenrichtung besitzt. Dies gilt insbesondere dann, wenn die Leitelemente, wie im beschriebenen Beispiel, in Form von von der Seite in den nutzbaren Bereich des Förderbandes hineinragenden, insbesondere plättchenförmigen, Stegen ausgebildet sind.

Grundsätzlich sind auch andere Ausbildungen der Leitelemente denkbar, die insgesamt eine voluminöse Formbildung aufweisen. Dann ist es vorteilhaft, wenn ein Randbereich, der entlang einer in der Ebene des Förderbands liegenden Linie an die nutzbare Oberfläche des Förderbands angrenzt, wobei, wenn flächige Schüttgutbestandteile zwischen Leitelement und Förderband geraten, sie zunächst zwischen diesen Randbereich und das Förderband geraten, der Randbereich derart gestaltet ist, dass die Linie sowohl eine Richtungskomponente in Förderrichtung als auch eine Richtungskomponente in Breitenrichtung zur Mitte des Förderbandes hin aufweist.

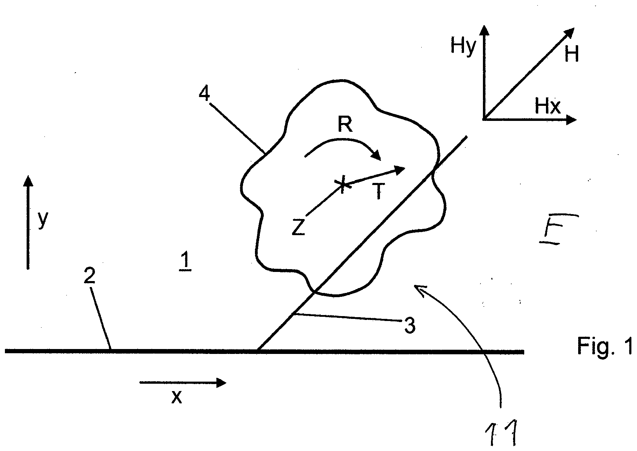

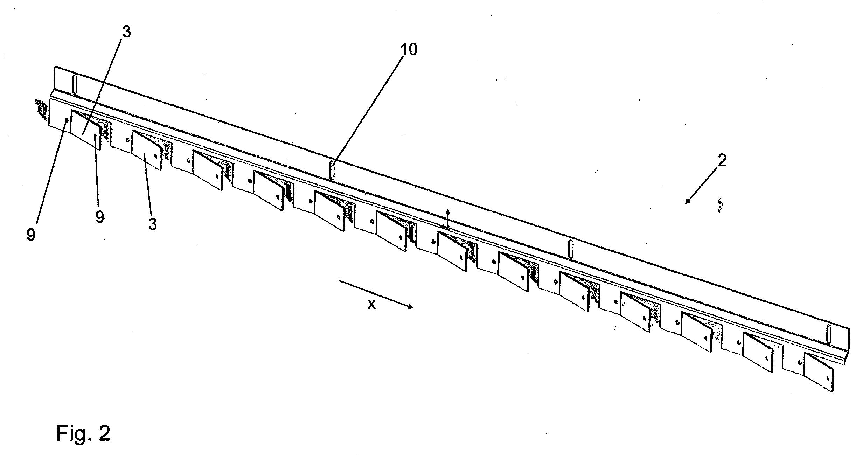

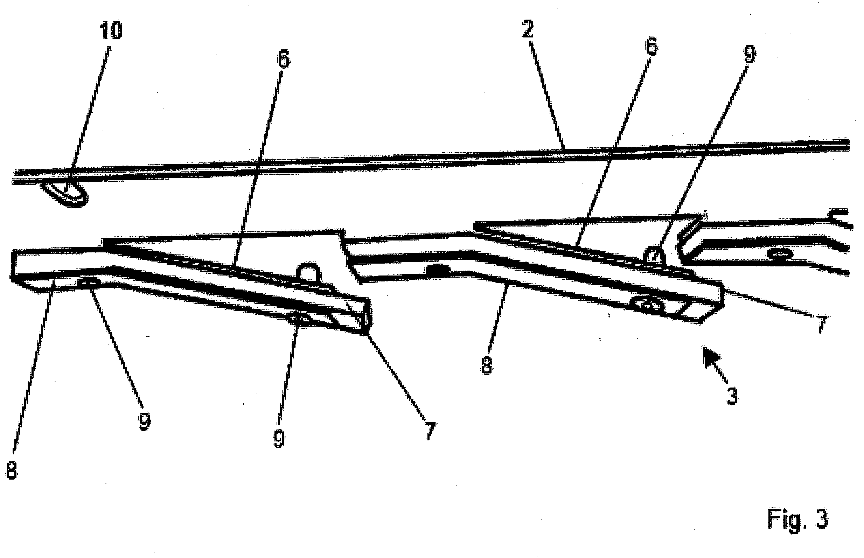

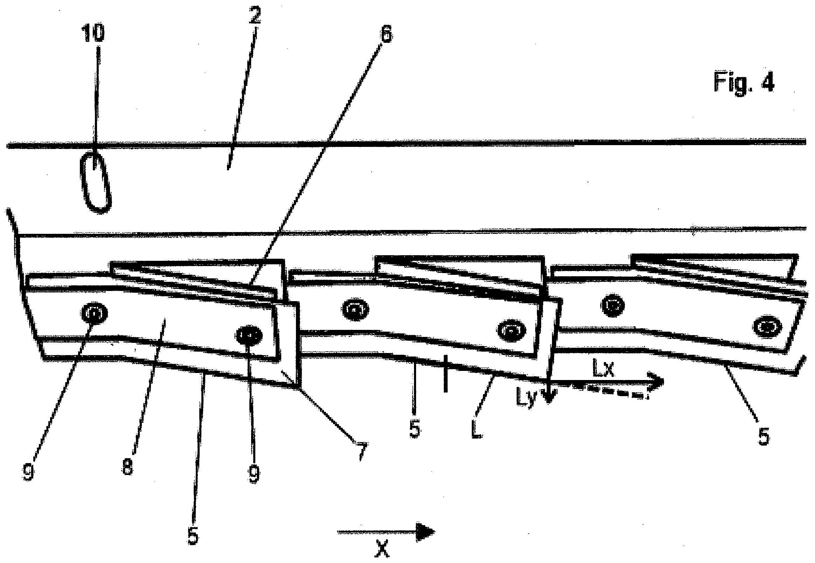

Die Erfindung wird im Folgenden anhand der Figuren 1 bis 5 schematisch näher erläutert.
Figur 1 zeigt eine schematische Übersicht über die räumliche Lage der einzelnen Bewegungs- und Richtungskomponenten zueinander.
Figur 2 zeigt eine beispielhafte schematische Darstellung eines seitlichen Begrenzungselements einer Fördereinrichtung mit Leitelementen.
Figuren 3 und 4 zeigen vergrößerte Darstellungen der beispielhaften Leitelemente aus unterschiedlichen Perspektiven.
Figur 5 zeigt eine schematische Draufsicht auf eine Fördereinrichtung.

Die erfindungsgemäße Verwendung einer Fördereinrichtung zur Förderung von Fördergut mit flächigen Fördergutbestandteilen wird durch die Merkmale des Anspruchs 1 definiert. Weitere Ausführungsformen der Erfindung ergeben sich aus den abhängigen Ansprüchen.

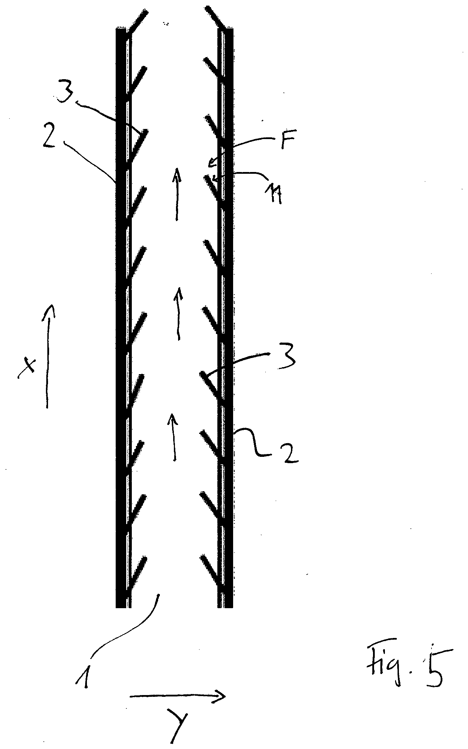

Die beispielhafte Fördereinrichtung weist ein Förderband 1 auf, welches mit seiner nutzbaren Oberfläche in seiner Breitenrichtung Y durch seitliche Begrenzungselemente 2 begrenzt wird. Diese besitzen eine Haupterstreckungsrichtung parallel zur Förderrichtung X des Förderbandes 1 und weisen Leitelemente 3 auf. Die Leitelemente 3 haben eine Haupterstreckungsrichtung H, welche eine Komponente Hx in Förderrichtung X des Förderbandes sowie eine Komponente Hy in Breitenrichtung des Förderbandes 1, die zur Mitte des Förderbandes 1 hin gerichtet ist, aufweist. In Förderrichtung X hinter jedem Leitelement 3 findet sich ein Freiraum F, welcher bevorzugt bis zum jeweils in Förderrichtung X folgenden Leitelement (vgl. Fig. 5) reicht. Teil dieses Freiraums F bildet im gezeigten Beispiel eine hinter dem Leitelement 3 liegende Hinterschneidung 11.

Gerät ein Fördergutbestandteil 4 zwischen das Förderband 1 und ein Leitelement 3, so erfährt er erfindungsgemäß durch die auf ihn wirkenden Reibkräfte eine translatorische Bewegung T, welche eine zur Mitte des Förderbandes 1 hin gerichtete Komponente aufweist. Bei der gezeigten Gestaltungsform entsteht eine zusätzliche rotierende Bewegung R um die Achse Z des beispielhaften Fördergutbestandteils 4. Falls ein sehr flacher Gegenstand unter dem Leitelement 3 hindurch gelangt, so wird es durch den Freiraum F bzw. die Hinterschneidung 11 weiter gefördert und trifft auf das in Förderrichtung folgende Leitelement 3. Der oben geschilderte Vorgang wiederholt sich entsprechend.

Das Begrenzungselement 2 besteht vorzugsweise aus einem starren bzw. steifen Material. Im gezeigten Beispiel sind Bereiche 6 des Begrenzungselements 2 von diesem in einem spitzen Winkel abgebogen und dienen so als Bestandteile der Leitelemente 3.

Die Leitelemente 3 können einen mehrschichtigen Aufbau wie im gezeigten Beispiel aufweisen, bei dem an dem abgebogenen Bereich 6 eine mittlere Schicht 7 aufgenommen ist. Diese Schicht 7 wird wiederum von einem Verstärkungselement 8 partiell abgedeckt und mittels Befestigungselementen 9, welche das Verstärkungselement 8 durch die Schicht 7 mit dem abgebogenen Bereich 6 verbinden, fixiert.

Eine derartige mehrschichtige Bauweise ermöglicht es, steifere formstabile Werkstoffe für Verstärkungselemente 8 und Begrenzungselemente 2 sowie die abgebogenen Bereiche 6 zu verwenden, wie beispielsweise Bleche. Gleichzeitig kann für die Schicht 7 der Leitelemente 3 ein Werkstoff gewählt werden, der weicher ist als der in den anderen Bestandteilen verwendete Werkstoff. Dies ist dann vorteilhaft, wenn der an die Oberfläche des Förderbandes 1 angrenzende Randbereich 5 durch die Schicht 7 gebildet wird. Dann kann ein Abschluss des Leitelements mit dem sich darunter weg bewegenden Förderband 1 nach Art einer Schleifdichtung realisiert werden. Dies ist zwar grundsätzlich mit allen Materialien möglich, jedoch bieten weichere Materialien, wie beispielsweise Kunststoffe, hier den Vorteil, nicht zu einem erhöhten Verschleiß bzw. Abrieb des Förderbandes zu führen, wie es der Fall wäre, wenn Blechteile nach Art einer Schleifdichtung auf ein Förderband gedrückt würden.

Weiterhin vorteilhaft an der beispielhaften Einheit aus seitlichem Begrenzungselement 2 und Leitelementen 3 ist deren einfache Montierbarkeit. So genügt es, Mittel 10 zur Befestigung der Begrenzungselemente 2 in geringer Zahl in diesen vorzusehen, wie sie im gezeigten Beispiel in Form von Langlöchern, welche in ihrer Haupterstreckungsrichtung senkrecht zur Oberfläche des Förderbandes orientiert sind, der Fall ist. Eine derartige Befestigung hat zudem den Vorteil, dass die Einheit aus seitlichem Begrenzungselement und Leitelementen aufgrund der Orientierung der Langlöcher in einfacher Weise eine Abstandsjustage der unteren Randbereiche 5 der Leitelemente 3 zur Oberfläche des Förderbandes 1 ermöglicht, um so einen für den Betrieb sinnvollen Kompromiss zwischen Reibung des Förderbandes an den Leitelementen und dem Widerstand der sich so ergebenden Spalt- oder Schleifdichtung gegen das Eindringen von Fördergutbestandteilen zu erzielen.

Alternativ können die Mittel 10 auch auf andere Weise als durch Langlöcher ausgeführt sein, wobei grundsätzlich jede Art der Befestigung, die die beschriebene Justage des Abstands zum Förderband ermöglicht, zu bevorzugen ist. Langlöcher ermöglichen dies in einfacher und damit kostengünstiger Weise.

Wie in Figur 5 gezeigt, sind die Leitelemente 3 vorzugsweise zu beiden Seiten des Förderbandes 1 angeordnet.

## Patentansprüche

1. Verwendung einer Fördereinrichtung, insbesondere Flachgutfördereinrichtung, zur Förderung von Fördergut mit flächigen Fördergutbestandteilen, umfassend ein Förderband (1) und Leitelemente (3), die an die nutzbare Oberfläche des Förderbands angrenzen, wobei die Leitelemente (3) derart ausgebildet sind, dass zwischen Förderband (1) und Leitelement (3) geratene Fördergutbestandteile (4) durch die Relativbewegung des Förderbandes (1) und der Leitelemente (3) in eine Bewegung versetzt werden, die eine in Breitenrichtung (Y) zur Mitte des Förderbands hin gerichtete translatorische Komponente (T) aufweist, wobei die Leitelemente (3) in Förderrichtung (X) hinter jedem Leitelement (3) liegende Freiräume (F) aufweisen,
wobei die Leitelemente (3) eine zu der nutzbaren Oberfläche des Förderbandes (1) parallele Haupterstreckungsrichtung (H) aufweisen, welche sowohl eine Richtungskomponente (HX) in Förderrichtung (X) als auch eine Richtungskomponente (HY) in Breitenrichtung (y) des Förderbandes (1) zur Mitte des Förderbandes (1) hin aufweist oder die Leitelemente (3) einen angrenzenden Randbereich (5) aufweisen, der entlang einer in der Ebene des Förderbandes liegenden Linie (L) an die nutzbare Oberfläche des Förderbandes (1) angrenzt, wobei die Linie sowohl eine Richtungskomponente (LX) in Förderrichtung (X) als auch eine Richtungskomponente (LY) in Breitenrichtung (y) des Förderbandes (1) zur Mitte des Förderbandes (1) hin aufweist, **dadurch gekennzeichnet,**
**dass** die Bewegung dadurch bewirkt wird, dass die flächigen Fördergutbestandteile (4) zwischen dem Förderband (1) und einem Leitelement (3) derart verklemmt werden, dass an der Unterseite der flächigen Fördergutbestandteile (4) das Förderband (1) und an der Oberseite das Leitelement (3) angreifen, wobei die entstehenden Reibkräfte zwischen einerseits dem Förderband (1) und dem Fördergutbestandteil (4), welche in Förderrichtung gerichtet sind, und andererseits zwischen dem Leitelement (3) und dem Fördergutbestandteil (4) dem Fördergutbestandteil (4) eine Bewegungskomponente translatorischer Art verleihen, die eine zur Mitte des Förderbandes (1) hin gerichtete Komponente in der Breitenrichtung des Förderbandes (1) aufweist.

2. Verwendung einer Fördereinrichtung nach Anspruch 1,
**dadurch gekennzeichnet,**
**dass** zwischen Förderband (1) und Leitelement (3) geratene Fördergutbestandteile (4) durch die Relativbewegung des Förderbandes (1) und der Leitelemente (3) in eine rotierende Bewegung versetzt werden.

3. Verwendung einer Fördereinrichtung nach Anspruch 1 oder 2,
**dadurch gekennzeichnet,**
**dass** die rotierende Bewegung eine Rotation (R) um eine, zumindest im Wesentlichen, senkrecht zur nutzbaren Fläche des Förderbandes (1) orientierte Achse (Z) ist.

4. Verwendung einer Fördereinrichtung nach einem der vorigen Ansprüche,
**dadurch gekennzeichnet,**
**dass** die Fördereinrichtung seitliche Begrenzungselemente (2) zur Begrenzung der nutzbaren Breite des Förderbandes (1) aufweist.

5. Verwendung einer Fördereinrichtung nach Anspruch 4,
**dadurch gekennzeichnet,**
**dass** die Begrenzungselemente eine zur Förderrichtung (X), zumindest im Wesentlichen, parallele Haupterstreckungsrichtung aufweisen.

6. Verwendung einer Fördereinrichtung nach Anspruch 4 oder 5,
**dadurch gekennzeichnet,**
**dass** die Leitelemente (3) in einem spitzen Winkel zu den Begrenzungselementen verlaufen.

7. Verwendung einer Fördereinrichtung nach einem der vorigen Ansprüche,
**dadurch gekennzeichnet,**
**dass** die Leitelemente (3) abgewinkelte Bereiche der Begrenzungselemente (2) sind oder als Bestandteil aufweisen.

8. Verwendung einer Fördereinrichtung nach einem der vorigen Ansprüche,
**dadurch gekennzeichnet,**
**dass** die Leitelemente (3) mehrschichtig aufgebaut sind, insbesondere aus steifen und flexiblen Materialien bestehen.

9. Verwendung einer Fördereinrichtung nach einem der vorigen Ansprüche,
**dadurch gekennzeichnet,**
**dass** die Leitelemente (3) als Stege, insbesondere plättchenförmige Stege, ausgebildet sind, welche in den nutzbaren Bereich des Förderbandes hineinragen.

10. Verwendung einer Fördereinrichtung nach einem der vorigen Ansprüche,
**dadurch gekennzeichnet,**
**dass** die Leitelemente (3) zu beiden Seiten des Förderbandes angeordnet sind.

11. Verwendung einer Fördereinrichtung nach einem der vorigen Ansprüche,
**dadurch gekennzeichnet,**
**dass** hinter jedem der Leitelemente (3) eine zugehörige Hinterschneidung (11) vorgesehen ist.

## Claims

1. Use of a conveyor device more particularly a flatbelt conveyor device, for conveying goods having flat component parts, comprising a conveyor belt (1) and guide elements (3) which adjoin the useful surface of the conveyor belt, wherein the guide elements (3) are designed so that component parts (4) of the goods being conveyed which have fallen between the conveyor belt (1) and the guide element (3) are set through the relative movement of the conveyor belt (1) and the guide elements (3) into a motion which has a translational component (T) directed in the width direction (Y) towards the centre of the conveyor belt, wherein the guide elements (3) have free spaces (F) lying in the conveying direction (X) behind each guide element (3), wherein the guide elements (3) have a main extension direction (H) which is parallel to the useful surface of the conveyor belt (1) and which has both a direction component (HX) in the conveying direction (X) and also a direction component (HY) in the width direction (y) of the conveyor belt (1) towards the centre of the conveyor belt (1), or the guide elements (3) have an adjoining edge region (5) which adjoins the useful surface of the conveyor belt (1) along a line (L) lying in the plane of the conveyor belt, wherein the line has both a direction component (LX) in the conveying direction (X) and also a direction component (LY) in the width direction (y) of the conveyor belt (1) towards the centre of the conveyor belt (1),
**characterised in that** the motion is caused **in that** the flat component parts (4) of the material being conveyed are clamped between the conveyor belt (1) and a guide element (3) in such a way that the conveyor belt (1) engages on the underneath side of the flat component parts (4) being conveyed, and the guide element (3) engages on the upper side, wherein the ensuing friction forces between on the one hand the conveyor belt (1) and the component part (4) of the material being conveyed, which are directed in the conveying direction, and on the other hand between the guide element (3) and the component part (4) of the material being conveyed impart to the component part (4) a motion component of the translational type which has a component directed towards the centre of the conveyor belt (1) in the width direction of the conveyor belt (1).

2. Use of a conveyor device according to claim 1 **characterised in that** component parts (4) of goods being conveyed which have fallen between the conveyor belt (1) and the guide element (3) are set in a rotational movement through the relative movement of the conveyor belt (1) and the guide elements (3).

3. Use of a conveyor device according to claim 1 or 2 **characterised in that** the rotational movement is a rotation (R) about an axis (Z) oriented, at least substantially, perpendicular to the usable surface of the conveyor belt (1).

4. Use of a conveyor device according to one of the preceding claims **characterised in that** the conveyor device has lateral boundary elements (2) for restricting the usable width of the conveyor belt (1).

5. Use of a conveyor device according to claim 4 **characterised in that** the boundary elements have a main extension direction which is, at least substantially, parallel to the conveying direction (X).

6. Use of a conveyor device according to claim 4 or 5 **characterised in that** the guide elements (3) run at an acute angle to the boundary elements.

7. Use of a conveyor device according to one of the preceding claims **characterised in that** the guide elements (3) are or have as a constituent part angled regions of the boundary elements (2).

8. Use of a conveyor dev ice according to one of the preceding claims **characterised in that** the guide elements (3) are constructed in multiple layers, more particularly consist of stiff and flexible materials.

9. Use of a conveyor device according to one of the preceding claims **characterised in that** the guide elements (3) are configured as webs, more particularly as small plate-shaped webs, which project into the usable region of the conveyor belt.

10. Use of a conveyor device according to one of the preceding claims **characterised in that** the guide elements (3) are arranged on both sides of the conveyor belt.

11. Use of a conveyor device according to one of the preceding claims **characterised in that** an associated undercut (11) is provided behind each of the guide elements (3).

## Revendications

1. Utilisation d'un dispositif de transport, en particulier d'un dispositif de transport de matières comprenant des composants plats de matières à transporter, qui comprend une bande de transport (1) et des éléments de guidage (3) adjacents à la surface utilisable de la bande de transport, sachant que les éléments de guidage (3) sont conçus de telle manière que, par le déplacement relatif de la bande de transport (1) et des éléments de guidage (3), les composants de matières à transporter (4), pris entre la bande de transport (1) et les éléments de guidage (3), sont soumis à un mouvement comprenant une composante translatoire (T), orientée dans le sens de la largeur (Y), vers le centre de la bande de transport (1), sachant que les éléments de guidage (3) présentent des espaces libres (F) qui sont situés derrière chacun des éléments de guidage (3), dans la direction de transport (X), sachant que les éléments de guidage (3) présentent une direction d'extension principale (H), parallèle à la surface utilisable de la bande de transport (1), qui présente aussi bien une composante directionnelle (HX) dans la direction de transport (X) qu'une composante directionnelle (HY) dans le sens de la largeur (Y) de la bande de transport (1), vers le centre de la bande de transport (1), ou que les éléments de guidage (3) présentent une zone marginale (5), adjacente à la surface utilisable de le bande de transport (1), le long d'une ligne située sur le plan de la bande de transport, sachant que la ligne présente aussi bien une composante directionnelle (LX) dans la direction de transport (X) qu'une composante directionnelle (LY) dans le sens de la largeur (Y) de la bande de transport (1), vers le centre de la bande de transport (1),
**caractérisée en ce que**
le mouvement résulte du fait que les composants plats de matières à transporter (4) sont serrés entre la bande de transport (1) et un élément de guidage (3) de telle manière que la bande de transport (1) attaque la face inférieure des composants plats de matières à transporter (4) et l'élément de guidage (3) attaque la face supérieure, sachant que les forces de friction, générées, d'une part, entre la bande de transport (1) et le composant de matières à transporter (4), lesquelles sont dirigées dans la direction de transport, et, d'autre part, entre l'élément de guidage (3) et le composant de matière à transporter (4), confèrent au composant de matière à transporter (4) une composante de mouvement du genre translatoire, qui présente une composante dirigée vers le centre de la bande de transport (1), dans le sens de la largeur de la bande de transport (1).

2. Utilisation d'un dispositif de transport selon la revendication 1,
**caractérisée en ce que**
des composants plats de matières à transporter (4) pris entre la bande de transport (1) et l'élément de guidage (3) sont mis en mouvement rotatif par le mouvement relatif de la bande de transport (1) et des éléments de guidage (3).

3. Utilisation d'un dispositif de transport selon revendication 1 ou 2,
**caractérisée en ce que**
le mouvement rotatif est une rotation (R) autour d'un axe (Z) orienté, au moins sensiblement, verticalement par rapport à la surface utilisable de la bande de transport (1).

4. Utilisation d'un dispositif de transport selon l'une des revendications précédentes,
**caractérisée en ce que**
le dispositif de transport présente des éléments de limitation (2) latéraux pour la limitation de la largeur utile de la bande de transport (1).

5. Utilisation d'un dispositif de transport selon la revendication 4,
**caractérisée en ce que**
les éléments de limitation présentent une direction d'extension principale au moins sensiblement parallèle à la direction de transport (X).

6. Utilisation d'un dispositif de transport selon la revendication 4 ou 5,
**caractérisée en ce que**
les éléments de guidage (3) s'étendent en angle aigu vers les éléments de limitation.

7. Utilisation d'un dispositif de transport selon l'une des revendications précédentes,
**caractérisée en ce que**
les éléments de guidage (3) sont des zones coudées des éléments de limitation (2) ou en présentent en tant que composants.

8. Utilisation d'un dispositif de transport selon l'une des revendications précédentes,
**caractérisée en ce que**
les éléments de guidage (3) sont composés de plusieurs couches, en particulier en matériaux rigides et flexibles.

9. Utilisation d'un dispositif de transport selon l'une des revendications précédentes,
**caractérisée en ce que**
les éléments de guidage (3) sont réalisés en forme de pattes, en particulier de pattes en forme de plaquettes, qui font saillie dans la section utilisable de la bande de transport.

10. Utilisation d'un dispositif de transport selon l'une des revendications précédentes,
**caractérisée en ce que**
les éléments de guidage (3) sont disposés des deux côtés de la bande de transport.

11. Utilisation d'un dispositif de transport selon l'une des revendications précédentes,
**caractérisée en ce que**,
derrière chacun des éléments de guidage (3), une contre-dépouille afférente est prévue (11).
